# EUROPÄISCHE PATENTSCHRIFT

(11) **EP 2 505 520 B1**
(45) Veröffentlichungstag und Bekanntmachung des Hinweises auf die Patenterteilung: **07.01.2015**
(21) Anmeldenummer: 12160903.6
(22) Anmeldetag: 23.03.2012
(51) Int. Cl.: B65G 11/12, B65G 11/18, B65G 69/18

(54) **Fördervorrichtung für pulverförmiges und/oder granuliertes Gut**
Transport device for powdery and/or granulated material
Dispositif de transport pour matériau pulvérulent et/ou granulaire

(30) Priorität: 30.03.2011 EP 11160513
(43) Veröffentlichungstag der Anmeldung: 03.10.2012
(73) Patentinhaber: Bayer Intellectual Property GmbH, 40789 Monheim (DE)
(72) Erfinder: Ungerechts, Herbert, 47647 Kerken (DE); Frank, Hans-Jörg, 47918 Tönisvorst (DE); Scholten, Dieter, 52477 Alsdorf (DE); Hagedorn, Markus, 45481 Mülheim an der Ruhr (DE)
(74) Vertreter: BIP Patents

(56) Entgegenhaltungen:
- EP-A1- 1 475 348
- GB-A- 892 315
- US-A- 5 845 686
- US-A- 5 881 780

## Beschreibung

Die Erfindung betrifft eine Fördervorrichtung für rieselfähige feinteilige Feststoffe, insbesondere für pulverförmiges und/oder granulatartiges (Misch-)gut, insbesondere Kunststoffgranulat. Insbesondere ist der Gegenstand der Erfindung ein senkrecht angeordnetes und flexibel montierbares Teleskop-Rohr zur Förderung von vorzugsweise Polymer-Granulaten z.B. in einer Anlage zur Abfüllung von Polymer-Granulaten.

Das bei der Herstellung thermoplastischer Kunststoffen im Reaktor anfallende grießförmige Produkt wird in einem Extruder plastifiziert und zu Einzelsträngen ausgeformt, die mittels eines im Granulierwerkzeug rotierenden Messers zu Granulaten geschnitten werden. Dieses Produkt kann in einem weiteren Schritt durch Compoundierung mit weiteren Komponenten versehen werden.

Als Compoundieren bezeichnet man in der Polymeraufbereitung die Herstellung der fertigen Kunststoff-Formmasse, dem Compound, aus den Kunststoffrohstoffen unter Zugabe von Füll- und Verstärkungsstoffen, Weichmachern, Haftvermittlern, Gleitmitteln, Stabilisatoren etc.. Die Compoundierung erfolgt überwiegend in Extrudern und umfasst die Verfahrensoperationen Fördern, Aufschmelzen, Dispergieren, Mischen, Entgasen und Druckaufbau.

Bei der Granulierung wird die Schmelze dann durch die Öffnungen einer Düsenplatte gepresst, so dass anschließend im Falle einer Stranggranulierung zunächst Schmelzestränge erzeugt werden, die dann bei der Granulierung Zylindergranulat ergeben oder aber im Falle einer Kopfgranulierung direkt am Austritt an der Düsenplatte geschnitten werden und dann Linsen- oder Kugelgranulat ergeben. Die Granulierung kann beispielsweise in einem Flüssigkeitsstrom erfolgen, der die Granulate kühlt und ein Agglomerieren weitgehend vermeidet. Anschließend wird das Granulat getrocknet und gesiebt.

Im Anschluss zur Granulierung nach der Herstellung oder nach der Compoundierung wird in der Regel das Produkt pneumatisch zu einem Silo oder Bunker gefördert. Anschließend wird den Silos oder Bunker das Schüttgut entnommen und in Container oder Silofahrzeuge gefüllt, oder es erfolgt eine Absackung des Schüttgutes in Big Bags, Oktabins oder Säcke. Bei jedem dieser Schritte können Stäube/Beläge z.B. durch Abrieb entstehen, die zusätzlich zum Schüttgut selbst dann bei einem Schüttgutwechsel eine Kontamination verursachen können.

Typische Schüttgüter sind z.B., Baustoffe, wie Oberboden, Sand, Kies, Schotter, Zement, andere mineralische Güter, wie Erz, Streusalz, und Lebensmittel, wie Getreide, Zucker, Speisesalz, Kaffee, Mehl, sowie pulverförmige Güter wie Pigmente, Füllstoffe, Granulate, Pellets usw.

Gleichzeitig wird die Forderung nach Flexibilität immer höher, so dass in einer Abfüllanlage Geräte je nach Bedarf austauschbar sind. Beispielsweise kann bei einem Schüttgut der Bedarf nach einem Sichter (Entstaubungseinheit) bestehen, um feine Partikel zu entfernen, wobei für andere Schüttgüter nur ein Förderrohr notwendig ist. Zudem sind die Investitionskosten nicht unerheblich, so dass eine flexible Lösung zum Einsatz beispielsweise eines Förderrohres an verschiedenen Orten einer Anlage ermöglicht wird.

DE 195 272 40 C1 beschreibt eine Fördervorrichtung, wobei ein Abschnitt der Förderleitung zwischen zwei starr zueinander beabstandeten Widerlagern auswechselbar angeordnet ist und der auswechselbare Förderleitungsabschnitt unter Wirkung einer Spannfeder teleskopierbar ausgebildet ist und sich die Enden der Teleskopanordnung an den Widerlagern abstützen. Nachteilig ist der konstruktionsbedingte entsprechende Aufwand für die Reinigung zur Vermeidung von Kontamination sobald ein anderer Feststoff befördert wird, insbesondere im Rohr-Flanschbereich und im Rohr-Innenverlauf.

Die Forderung nach leichter Auswaschbarkeit von Fördervorrichtungen vor dem Befördern eines anderen Schüttguttyps wird jedoch zunehmend häufiger gestellt.

Da der bisherige Stand der Technik keine hinreichende Lösung zu diesem Problem ermöglicht, war es Aufgabe der vorliegenden Erfindung, eine Fördervorrichtung bereitzustellen, das eine dichte Verbindung zwischen Feststoff-Entnahme-Vorrichtungen und Feststoff-Transportgebinde ermöglicht, die auf Ebenen unterschiedlicher Höhe senkrecht übereinander angeordnet sind. Dabei sind unterschiedliche Einfüllhöhen der Gebinde auszugleichen. Diese Teleskop-Förderrohre sollten insbesondere an unterschiedlichen Positionen innerhalb eines Abfüllgebäudes einsetzbar sein, und zu diesem Zweck austauschbar und leicht aber dennoch sicher montierbar sein.

Die Aufgabe der vorliegenden Erfindung ist es daher, die Nachteile des Standes der Technik zu beheben.

Die gestellte Aufgabe wurde daher durch Bereitstellen einer Fördervorrichtung gelöst, die ein teleskopierbares Förderrohr beinhaltet und die folgenden Merkmale aufweist:
a) ein Initial-Hubrohr (10) mit konusförmigem Einlaufflansch am oberen Förderrohr mit radialem Toleranzausgleich und Rückstellfedern
b) eine Durchlaufwaage (11) mit Trichter und festem Rohrabschnitt
c) ein großes Hubrohr (13) mit Seilwinde (15) und Schlaffseilüberwachung
d) ein Aufliegekranz (16) und Füllstandsüberwachung am Förderrohrauslauf
e) eine ringförmige Spülvorrichtung (12) am Teleskoprohr
f) teilweise festmontierte Spüleinrichtungskomponenten, Spülrohre oder Spülkugel mit Flansch
g) die Rohrleitungen, Verschlauchung für Druckluft, VE-Wasser und Abwasser
h) die Schließ-, Steuerarmaturen
i) lokale Steuereinheit für die Abfüll- und Spülprozesse
j) gegebenenfalls Sensoren an einem oder beiden Flanschen des Förderrohres, mit deren Hilfe die Andockung eines Rohrendes zu einer Andockvorrichtung oder zu einem Gegenflansch durch eine sog. Initiator-Abfrage sicher erfasst werden kann;
k) gegebenenfalls Anordnung des Rohres auf einer mobilen Arbeitsplattform zum Transport des Rohres an unterschiedliche Abfüllstellen auf der Bühne, wobei die mobile Arbeitsplattform Hebe- und Senk-Einrichtung (10, 15) zur Positionierung des Rohres an unterschiedlichen Andockvorrichtungen auf einer Bühne enthält.
l) gegebenenfalls eine Hebe-Verfahrvorrichtung (8) zur sicheren Entnahme des Bodendeckels
m) gegebenenfalls Andockvorrichtung für Kleinschlepper (14) / Mover zum angetriebenen Verfahren der Arbeitsplattform

**Fig. 1****.** zeigt ein Teleskop-Förderrohr im eingefahrenden - und im angedockten Zustand.
**Fig. 2**. zeigt eine Bodendeckel Hebe- und Verfahrvorrichtung mit den einzelnen Arbeitsschritten.

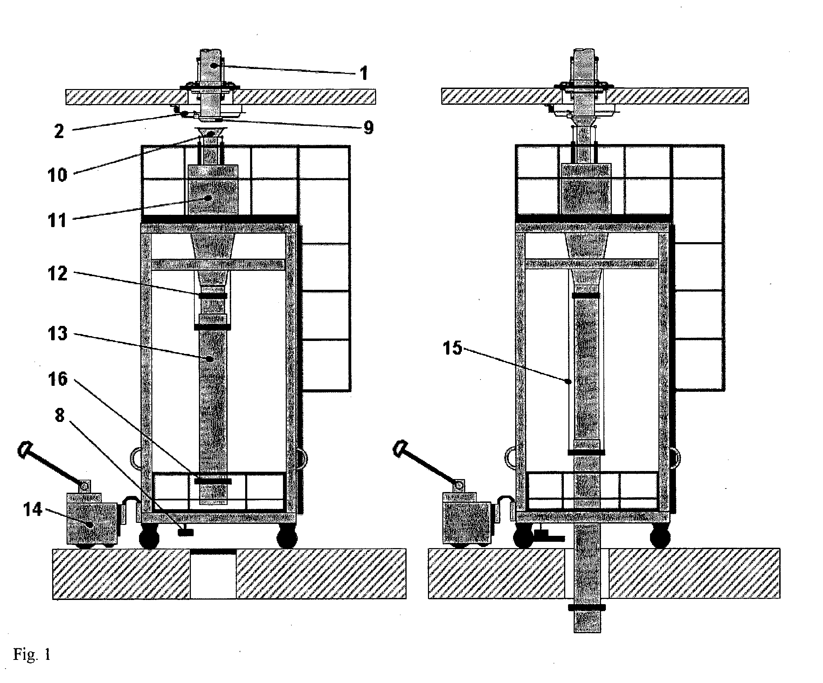

Das Teleskop-Förderrohr ist kein starres Rohr, sondern besteht aus zwei oder mehreren Rohrsegmenten - die nicht zwangsläufig eine zylindrische Form aufweisen müssen, sondern auch einen vieleckigen Querschnitt aufweisen können - die zusammengesetzt sind und sich in einander verschieben lassen (siehe Fig. 1). Auf diese Weise entsteht ein Förderrohr, dessen Länge sich durch teleskopartiges Ineinanderschieben oder Auseinanderziehen der miteinander in Verbindung stehenden Rohrsegmente variieren lässt.

In einer besonders bevorzugten Ausführungsform enthält die Feststoff-Fördervorrichtung (Fig. 1) (möglichst) keine Toträume oder Fugen jeglicher Art, in denen Feststoff-Rückstände nach Abfüllvorgängen verbleiben und nachfolgend abgefüllte Feststoff-Partien verunreinigen könnten. Die Abdichtung der gegeneinander verschiebbaren Rohrsegmente erfolgt so, dass für keine Toträume entstehen, die sich mit Granulat-Resten füllen könnten.

Ein solches Teleskop-Granulat-Förderrohr (Fig. 1) wird zur sicheren Entfernung von möglicherweise noch anhaftenden Staub- oder Granulat-Resten an den Produkt-berührten Flächen mit Wasser oder einer anderen geeigneten Flüssigkeit gespült. Das Teleskop-Granulat-Förderrohr enthält zusätzlich noch eine gegebenenfalls ringförmige Spülvorrichtung (12, Fig. 1) für die Außenseite des Teleskop-Rohres. Zudem wird eine Spülkugel mit Flansch auf den Einlaufflansch des Initial-Hubrohres (10) gesetzt. Ein Spülprogramm läuft in der lokalen Steuereinheit und sorgt für einen automatisierten Spülprozess, der die Spülkomponenten von oben nach unten ansteuert und somit eine Wassereinleitung über Spülkugeln und Düsen bewirkt. Das Abwasser läuft aus dem Teleskop-Granulat-Förderrohr bis in die unterste Ebene dann über einen Filterwagen (18) in einen Abwasserkanal ab.

In einer weiteren besonders bevorzugten Ausführungsform wird eine durch das Teleskop-Förderrohr (Fig. 1) abgefüllte Feststoffmenge in ein darunter befindliches Transportgebinde, wie z.B. einen Silo-LKW oder Container geleitet. Die hierzu benötigte Wiege-Vorrichtung wird in der Regel an einer jeden Abfüllstelle benötigt, somit ist es sinnvoll, diese in die mobilen Abfüllgeräte zu integrieren, um eine Mehrzahl an fest installierten Wiege-Vorrichtungen oder eine zentrale Wiege-Vorrichtung mit Zuführungs-Leitungen, die wiederum zu spülen sind, zu vermeiden. In dieser Ausführungsform wird beispielsweise eine Hochleistungs-Durchfluss-Waage (11) direkt mit dem Teleskop-Förderrohr (13) verbunden, sodass während des Abfüllvorgangs die durch das Teleskop-Förderrohr in das Transportgebinde fließende Feststoff-Menge kontinuierlich erfasst und überwacht werden kann. **Fig. 1****.** veranschaulicht eine solche Konstruktion.

Zum Andocken an den obigen Rohrauslaufflansch (9) des Granulat-Förderrohres (1) wird bevorzugt ein Initial-Hubrohr (10) mit einem komplementären Flansch, von der unteren Ebene aus gesteuert, dicht und Totraum-frei aufgesetzt. Dabei werden Lagetoleranzen des Rohrauslaufflansches (9) durch das auf Teflon gelagerte und somit leicht radial bewegliche Initial-Hubrohr (10) ausgeglichen. Durch die trichterförmige Ausführung des Rohrauslaufflansches (9) werden beide Flansche zueinander zentriert. Rückstellfedern führen das Initial-Hubrohr (10) nach dem Abdocken wieder in die zentrische Ruheposition zurück.

Die Hochleistungs-Durchflusswaage (11) ist mit dem Granulat-Förderrohr Totraum-frei verbunden und kann mit Wasser zur Entfernung von Granulatresten gespült werden. Solche Hochleistungs-Durchflusswaagen sind im Handel erhältlich und werden z.B. unter der Bezeichnung Elektronische Nettowaage von der Fa. Haver & Boecker vertrieben.

Der Rohr-Einlaufflansch am Initial-Hubrohr (10) ist bevorzugt so ausgebildet, dass sie eine bei Normaldruck staub- und wasserdichte Verbindung zu den jeweiligen Gegenflanschen entsprechender Behälter, Rohrleitungsenden oder sonstiger Andockvorrichtungen ermöglichen, wobei die Flanschverbindungen bevorzugt frei von Fugen oder Toträumen jeglicher Art sind. Dadurch kann die Kontamination von Granulat-Partien mit Fremdgranulaten aus der Abfüllung vorangegangener Granulate weitestgehend vermieden werden. Zusätzliche Dichtmaterialien für die Flansche können verwendet werden, sind aber nicht unbedingt erforderlich. Geeignete Materialien für solche Flansche sowie für das Teleskop-Rohr sind Kunststoff, Metall oder Stahl; bevorzugt ist Edelstahl. Die Rohrlänge ist bevorzugt auf die Höhe der Gebäude-Bühnen bzw. auf die Abstände der zu verbindenden Apparate abgestimmt. Als Zentrierhilfe und somit zur leichteren Montage sind die Flansche und Gegenflansche bevorzugt konusförmig ausgeführt.

Die Flansche oder Gegenflansche des erfindungsgemäßen Teleskop-Förderrohres können gegebenenfalls in einer bevorzugten Ausführungsform zusätzlich Sensoren enthalten, die die Stellung des Flansches einer Andockvorrichtung durch eine sogenannte Initiator-Abfrage anzeigen und somit einen korrekten Andockvorgang automatisiert sicher erkennen lassen. Solche Initiatoren sind handelsübliche Geräte und werden beispielsweise unter der Bezeichnung NCB15-30GM40-N0-V1. von der Fa. Pepperl und Fuchs. vertrieben.

Das erfindungsgemäße Teleskop-Förderrohr ist aufgrund seiner Abmessungen und seines Eigengewichtes in der Regel nicht ohne weiteres manuell handhabbar, insbesondere nicht während den Andock-Manövern, die eine hohe Präzision erfordern. Um diese Handhabung zu erleichtern, wird das Teleskop-Förderrohr in einer bevorzugten Ausführungsform mit Hilfe einer mobilen Arbeitsplattform in die gewünschte Arbeitsposition gebracht, wie beispielhaft in **Fig. 1****.** schematisch dargestellt.

Das teleskopartige Förderrohr lässt sich mit Hilfe der oben beschriebenen mobilen Arbeitsplattform (Fig. 1) problemlos durch eine Bodenöffnung hindurchschieben, so dass auch Apparate über eine Distanz von mehr als einer Bühnenhöhe sicher mit einander verbunden werden können.

Die erfindungsgemäße Arbeitsplattform ist dazu geeignet, das Teleskop-Förderrohr von einem Ort zum Anderen zu bewegen. Da diese Arbeitsplattform verfahren werden kann, lässt sich auf diese Weise das Teleskop-Förderrohr sehr flexibel an unterschiedliche Abfüll-Position montieren. Die Hebe- und Senk-Vorrichtungen (insbesondere der mobile teleskopierbare Teil) können in einer bevorzugten Ausführungsform mechanisch, pneumatisch beispielsweise durch elektrische Antriebe (15) unterstützt werden. Das Heben und Senken des Rohres erfolgt durch eine Seilwinde (15) mit Schlaffseilüberwachung. Liegt das Rohr auf dem zu befüllendem Gebinde auf, so betätigt eine auf dem Seil liegende Rolle, die nun durch das erschlaffte Seil abwärts bewegt wird, über einen Hebelarm einen Schalter, der die Abschaltung der Winde erwirkt. Gleichzeitig wird diese Abschaltung als Freigabe für einen Abfüllprozess genutzt, damit kein Granulat unkontrolliert aus der obigen Feststoff-Entnahme-Vorrichtung austreten kann.

Ebenso kann die gesamte Arbeitsplattform vorzugsweise durch elektrische, gegebenenfalls ortsbewegliche Antriebe bewegt werden. Ortsbewegliche, d.h. eigenständig verfahrbare vom Transportgut entkoppelbare Antriebe haben den Vorteil, dass Sie für unterschiedliche Transportaufgaben eingesetzt werden können. Dieser sogenannte Kleinschlepper oder Mover (14) läßt sich mit einem Hubwerk inkl. einem Adaptionsausleger an den Rahmen der Arbeitsplattform formschlüssig verbinden. Somit kann der Bediener über ein angetriebenes drehbares Bodenrad des Movers die Arbeitsplattform beschleunigen, abbremsen und lenken, wie in Fig. 1 dargestellt. Es können aber auch fest mir der Arbeitsplattform verbundene Antriebe verwendet werden.

Zur Positionierhilfe der Arbeitsplattform unterhalb eines Silos werden in einer bevorzugten Ausführungsform drei Positionslaser eingesetzt, die zwei oder mehr, bevorzugt drei, Lichtpunkte auf den Boden werfen. Bei einer korrekten Positionierung befinden sich die Lichtpunkte in einem genau definierten Bereich, beispielsweise auf dem runden Bodendeckelrand.

Zur weiteren Arbeitssicherheit wird in einer weiteren bevorzugten Ausführungsform für das Öffnen des Bodendeckels (wenn vorhanden) zur Absicherung der Bodenöffnung eine separate Hebe-Verfahrvorrichtung (7) beispielsweise mit elektrischem Lastmagnet (8) eingesetzt.

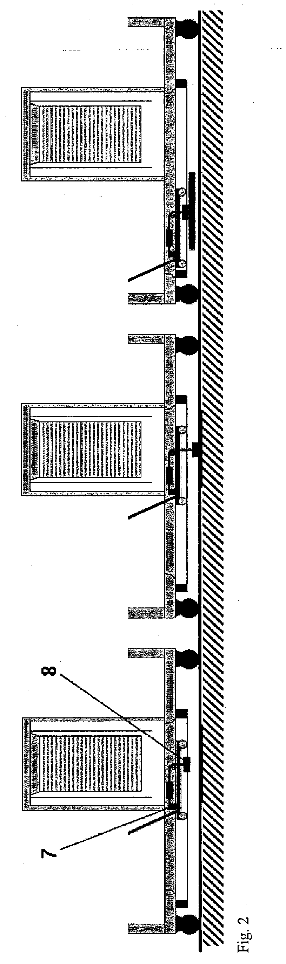

So ist bevorzugt eine Deckelhebe-Vorrichtung (7 und 8) mit der mobilen Arbeitsplattform für das Teleskop-Förderrohr fest verbunden, mit deren Hilfe vorhandene Deckel in Bodenöffnungen von Gebäudebühnen angehoben und gegebenenfalls bei Seite gelegt werden können, damit das Teleskop-Förderrohr durch die frei gewordene Bodenöffnung hindurch geführt werden kann. Die Deckelhebe-Vorrichtung (7 und 8) ist dabei so in die mobile Arbeitsplattform integriert, dass der Hebemechanismus direkt unter dem Rohr-Auslaufflansch wirksam wird. Die Konstruktion und Funktionsweise einer solchen Deckelhebe-Vorrichtung wird durch die **Fig.** 2. veranschaulicht.

Diese Deckelhebe-Vorrichtung (7 und 8) kann grundsätzlich auch als separate, gegebenenfalls mobile Vorrichtung verwendet werden.

Die Merkmale des erfindungsgemäßen Teleskop-Förderrohres werden in den Figuren 1. und 2. veranschaulicht, ohne sie dadurch auf den Inhalt dieser Figuren einzuschränken.

## Patentansprüche

1. Fördervorrichtung, die ein teleskopierbares Förderrohr und wenigstens folgende Merkmale beinhaltet
a) ein Initial-Hubrohr (10) mit konusförmigem Einlaufflansch am oberen Förderrohr mit radialem Toleranzausgleich und Rückstellfedern
b) eine Durchlaufwaage (11) mit Trichter und festem Rohrabschnitt
c) ein großes Hubrohr (13) mit Seilwinde (15) und Schlaffseilüberwachung
d) ein Aufliegekranz (16) und Füllstandsüberwachung am Förderrohrauslauf
e) eine ringförmige Spülvorrichtung (12) am Teleskoprohr
f) teilweise festmontierte Spüleinrichtungskomponenten, Spülrohre oder Spülkugel mit Flansch
g) die Rohrleitungen, Verschlauchung für Druckluft, VE-Wasser und Abwasser
h) die Schließ-, Steuerarmaturen
i) lokale Steuereinheit für die Abfüll- und Spülprozesse.

2. Fördervorrichtung gemäß Anspruch 1, **dadurch gekennzeichnet, dass** Sensoren an einem oder beiden Flanschen des Förderrohres angebracht sind.

3. Fördervorrichtung gemäß Anspruch 1 **dadurch gekennzeichnet, dass** die Vorrichtung totraumfrei ausgeführt wird.

4. Fördervorrichtung gemäß Anspruch 1 oder 2, **dadurch gekennzeichnet, dass** das Rohr auf einer mobilen Arbeitsplattform zum Transport des Rohres an unterschiedliche Abfüllstellen auf der Bühne angeordnet ist, wobei die mobile Arbeitsplattform Hebe- und Senk-Einrichtung (10, 15) zur Positionierung des Rohres an unterschiedlichen Andockvorrichtungen auf einer Bühne enthält.

5. Fördervorrichtung gemäß Anspruch 4 **dadurch gekennzeichnet, dass** Hebe-, Senk-Einrichtung durch elektrische Antriebe unterstützt werden.

6. Fördervorrichtung gemäß Anspruch 4 oder 5, **dadurch gekennzeichnet, dass** eine Hebe-Verfahrvorrichtung (8) zur sicheren Entnahme des Bodendeckels an der Arbeitsplattform vorhanden ist.

7. Fördervorrichtung gemäß einem der Anspruche 4 bis 6, **dadurch gekennzeichnet, dass** die Arbeitsplattform durch elektrische, gegebenenfalls ortsbewegliche Antriebe bewegt werden.

8. Fördervorrichtung gemäß einem der Ansprüche 1 bis 7 **dadurch gekennzeichnet, dass** die gemeinsame Lage der Lichtpunkte von Positionslasern, einen Positioniervorgang der Arbeitsplattform unterstützt.

9. Fördervorrichtung gemäß einem der Ansprüche 1 bis 8 **dadurch gekennzeichnet, dass** über die Schlaffseilabfrage eine Freigabe für den Abfüllprozess erfolgt.

10. Fördervorrichtung gemäß einem der Ansprüche 1 bis 9 **dadurch gekennzeichnet, dass** das Initial-Hubrohr (10) radial verschiebbar ist.

11. Verwendung einer Fördervorrichtung gemäß einem der Ansprüche 1 bis 10 zur Förderung von Schüttgut.

12. Verwendung einer Fördervorrichtung gemäß Anspruch 11 zur Förderung von Polycarbonat-Granulat

13. Verfahren zur Reinigung der Fördervorrichtung gemäß einem der Ansprüche 1 bis 12, **dadurch gekennzeichnet, dass** ein Spülprogramm den Spülprozess automatisiert und die Spülkomponenten zur Wassereinleitung von oben nach unten ansteuert.

14. Verfahren zur Reinigung der Fördervorrichtung gemäß Anspruch 13, **dadurch gekennzeichnet, dass** eine ringförmige Spüleinrichtung die Außenseite des Teleskop-Rohres reinigt.

## Claims

1. Conveying device containing a telescopic conveying pipe and at least the following features
a) an initial lifting pipe (10) with a conical inlet flange on the upper conveying pipe with radial tolerance compensation and restoring springs
b) a continuous transit weigher (11) with a funnel and a fixed section of pipe
c) a large lifting pipe (13) with a cable winch (15) and slack cable monitoring
d) a resting ring (16) and filling level monitoring at the conveying pipe outlet
e) an annular flushing device (12) on the telescopic pipe
f) to some extent fixedly mounted flushing device components, flushing pipes or a flushing ball with flange
g) the pipelines, tubing for compressed air, fully demineralized water and waste water
h) the closing, controlling valves
i) local control unit for the filling and flushing processes.

2. Conveying device according to Claim 1, **characterized in that** sensors are provided on one or both flanges of the conveying pipe.

3. Conveying device according to Claim 1, **characterized in that** the device is constructed with no dead space.

4. Conveying device according to Claim 1 or 2, **characterized in that** the pipe is disposed on a mobile work platform for the transport of the pipe to different filling sites on the stage, the mobile work platform containing a lifting device and a lowering device (10, 15) for positioning of the pipe at different docking devices on a stage.

5. Conveying device according to Claim 4, **characterized in that** the lifting device and the lowering device are supported by electric drives.

6. Conveying device according to Claim 4 or 5, **characterized in that** a lifting/transporting device (8) is present for secure removal of the ground cover on the work platform.

7. Conveying device according to one of Claims 4 to 6, **characterized in that** the work platform is moved by electric, where necessary movable drives.

8. Conveying device according to one of Claims 1 to 7, **characterized in that** the common position of the light spots of positioning lasers supports a positioning operation of the work platform.

9. Conveying device according to one of Claims 1 to 8, **characterized in that** a go-ahead for the filling process is given by way of the slack cable enquiry.

10. Conveying device according to one of Claims 1 to 9, **characterized in that** the initial lifting pipe (10) is radially displaceable.

11. Use of a conveying device according to one of Claims 1 to 10 for the conveyance of bulk material.

12. Use of a conveying device according to Claim 11 for the conveyance of polycarbonate granulate.

13. Method for cleaning the conveying device according to one of Claims 1 to 12, **characterized in that** a flushing program automates the flushing process and selects the flushing components for the introduction of water from the top downwards.

14. Method for cleaning the conveying device according to Claim 13, **characterized in that** an annular flushing device cleans the outer side of the telescopic pipe.

## Revendications

1. Dispositif de transport, comprenant un tube de transport télescopique et au moins les caractéristiques suivantes :
a) un tube de levage initial (10) avec une bride d'entrée de forme conique au niveau du tube de transport supérieur avec une compensation des tolérances radiale et des ressorts de rappel,
b) une balance de pesage continue (11) avec une trémie et une section tubulaire fixe,
c) un gros tube de levage (13) avec un treuil (15) et un contrôle du relâchement du câble,
d) une couronne d'appui (16) et un contrôle de niveau au niveau de la sortie du tube de transport,
e) un dispositif de rinçage annulaire (12) au niveau du tube télescopique,
f) des composants du dispositif de rinçage montés en partie fixement, des tubes de rinçage ou des billes de rinçage, avec bride,
g) les conduites tubulaires, le système de canalisations pour l'air comprimé, l'eau déminéralisée et les eaux usées,
h) les robinets de fermeture et de commande,
i) une unité de commande locale pour les processus de remplissage et de rinçage.

2. Dispositif de transport selon la revendication 1, **caractérisé en ce que** des capteurs sont montés au niveau d'une ou des deux brides du tube de transport.

3. Dispositif de transport selon la revendication 1, **caractérisé en ce que** le dispositif est réalisé sans espaces morts.

4. Dispositif de transport selon la revendication 1 ou 2, **caractérisé en ce que** le tube est disposé sur une plate-forme de travail mobile en vue du transport du tube à différents points de remplissage sur la plate-forme, la plate-forme de travail mobile présentant un dispositif de levage et un dispositif d'abaissement (10, 15) pour positionner le tube sur différents dispositifs d'arrimage sur une plate-forme.

5. Dispositif de transport selon la revendication 4, **caractérisé en ce que** le dispositif de levage et le dispositif d'abaissement sont assistés par des entraînements électriques.

6. Dispositif de transport selon la revendication 4 ou 5, **caractérisé en ce qu'**un dispositif de déplacement et de levage (8) est prévu pour enlever de manière sûre le couvercle de fond au niveau de la plate-forme de travail.

7. Dispositif de transport selon l'une quelconque des revendications 4 à 6, **caractérisé en ce que** la plate-forme de travail est déplacée par des entraînements électriques, éventuellement mobiles.

8. Dispositif de transport selon l'une quelconque des revendications 1 à 7, **caractérisé en ce que** la position commune des points lumineux de lasers de positionnement assiste une opération de positionnement de la plate-forme de travail.

9. Dispositif de transport selon l'une quelconque des revendications 1 à 8, **caractérisé en ce qu'**un déblocage pour le processus de remplissage a lieu par le biais de la détermination du relâchement du câble.

10. Dispositif de transport selon l'une quelconque des revendications 1 à 9, **caractérisé en ce que** le tube de levage initial (10) peut être déplacé radialement.

11. Utilisation d'un dispositif de transport selon l'une quelconque des revendications 1 à 10 pour le transport de produit en vrac.

12. Utilisation d'un dispositif de transport selon la revendication 11 pour le transport de granulés de polycarbonate.

13. Procédé de nettoyage du dispositif de transport selon l'une quelconque des revendications 1 à 12, **caractérisé en ce qu'**un programme de rinçage automatise le processus de rinçage et commande les composants de rinçage pour l'introduction d'eau de haut en bas.

14. Procédé de nettoyage du dispositif de transport selon la revendication 13, **caractérisé en ce qu'**un dispositif de rinçage annulaire nettoie le côté extérieur du tube télescopique.
